(19) **Europäisches Patentamt / European Patent Office / Office européen des brevets**

(11) **EP 4 353 844 B1**

(12) **EUROPEAN PATENT SPECIFICATION**

(45) Date of publication and mention of the grant of the patent:
**12.11.2025 Bulletin 2025/46**

(21) Application number: **22819991.5**

(22) Date of filing: **12.05.2022**

(51) International Patent Classification (IPC):
*C21C 7/00* (2006.01)   *C21C 7/072* (2006.01)
*C21C 7/10* (2006.01)   *C21C 7/06* (2006.01)
*C21C 7/064* (2006.01)

(52) Cooperative Patent Classification (CPC):
**C21C 7/06; C21C 7/0006; C21C 7/0645; C21C 7/072; C21C 7/10; Y02P 10/20**

(86) International application number:
**PCT/JP2022/020010**

(87) International publication number:
**WO 2022/259807 (15.12.2022 Gazette 2022/50)**

(54) **METHOD FOR SECONDARILY REFINING MOLTEN STEEL AND METHOD OF PRODUCING STEEL**

VERFAHREN ZUM SEKUNDÄREN RAFFINIEREN VON GESCHMOLZENEM STAHL UND VERFAHREN ZUR HERSTELLUNG VON STAHL

PROCÉDÉ POUR L'AFFINAGE SECONDAIRE DE L'ACIER FONDU ET PROCÉDÉ DE PRODUCTION D'ACIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.06.2021 JP 2021098139**

(43) Date of publication of application:
**17.04.2024 Bulletin 2024/16**

(73) Proprietor: **JFE Steel Corporation Tokyo 100-0011 (JP)**

(72) Inventors:
• **TADA, Chikashi Tokyo 100-0011 (JP)**
• **NEGISHI, Hidemitsu Tokyo 100-0011 (JP)**

(74) Representative: **Hoffmann Eitle Patent- und Rechtsanwälte PartmbB Arabellastraße 30 81925 München (DE)**

(56) References cited:
WO-A1-2007/091700    JP-A- 2002 339 014
JP-A- 2014 148 737    JP-A- H0 987 730
JP-A- H09 165 615    KR-A- 20190 142 355
US-B1- 6 190 435

## Description

Technical Field

The present invention relates to a method for secondarily refining molten steel charged in a reaction vessel, such as a ladle, by reactions among the molten steel, slag added and formed on top of the molten steel, and oxygen-containing gas blown onto the slag, and to a steel production method.

Background

Nitrogen is a harmful element for metal materials. In a conventional steel production process, nitrogen [N] in molten iron is removed mainly by having it adsorbed onto the surfaces of gas bubbles of carbon monoxide that is generated during a decarburization process of molten pig iron. Therefore, when it comes to molten steel with a low carbon concentration, due to the limited amount of carbon monoxide to be generated, a similar technique cannot remove nitrogen to a low concentration.

Meanwhile, to reduce $CO_2$ emissions, the steel production process needs to shift from a conventional method using a blast furnace and a converter to a method including melting scrap or reduced iron. In that case, molten iron obtained has a low carbon concentration, which may make it impossible to produce low-nitrogen steel for the above-described reason.

In this context, methods of removing nitrogen from molten steel using slag have been proposed. For example, Patent Literature 1 proposes a method for inexpensively producing low-nitrogen steel even when the molten steel has a low carbon concentration. In this method, after molten steel is melted by an electric furnace using scrap as a main iron source and tapped to another refining vessel, a metal-Al-containing substance and CaO are added onto a bath surface of the molten steel such that $CaO/Al_2O_3$ (hereinafter, "C/A") in the mass ratio falls within a range of 0.8 to 1.2, and oxygen-containing gas is supplied to the molten steel to thereby promote a denitrification reaction using an AlN formation. Patent Literature 2 and 3 further disclose alternative methods for secondarily refining molten steel. reaction.

Citation List

Patent Literature

> Patent Literature 1: JP-2007-211298A
> Patent Literature 2: US 6 190 435 B1
> Patent Literature 3: KR 2019 0142355 A

Non Patent Literature

Non Patent Literature 1: Ueno et al.: Tetsu-to-Hagane, 101 (2015), 74

Summary of Invention

Technical Problem

However, the above-described conventional technology has the following problems.

It is mentioned in the technology described in Patent Literature 1 that the C concentration in the molten steel before processing is set to 0.01 to 0.05 mass% while no carbon is added to the molten steel. In a step preceding a denitrification process, decarburization (primary refining) of molten metal is performed in a converter or an electric furnace by blowing oxygen. In this case, when the C concentration in the molten steel becomes 0.05 mass% or lower, the decarburization efficiency decreases rapidly, leading to problems such as generation of FeO, a reduction in the iron yield, and prolongation of the processing time in the converter or the electric furnace.

Another problem is that the method of Patent Literature 1 causes erosion of the refractory of the ladle. This is presumably because when the value of C/A becomes low, slag is formed and adds to erosion of the refractory.

Further, the method described in Patent Literature 1 is faced with a challenge that when the oxygen gas is supplied to the molten steel, carbon in the molten steel reacts with the oxygen gas to generate carbon monoxide gas, which causes the slag present on top of the molten steel to expand and overflow. Slag overflow is believed to occur due to rapid generation of the CO gas.

While removing sulfur, other than nitrogen, in molten steel is also a role of secondary refining, Patent Literature 1 does not mention simultaneous processing of denitrification and desulfurization. Thus, removing sulfur in molten steel incurs an additional production cost, as it requires separately providing a process such as forming slag composed mainly of $CaO$ and $Al_2O_3$ while performing electrode heating by a ladle furnace (LF), for example, and removing sulfur while bringing the slag and the molten steel into contact with each other.

The present invention has been devised in view of these circumstances, and an object thereof is to propose a molten steel secondary refining method by which, when secondarily refining molten steel by blowing oxygen-containing gas while performing a molten steel denitrification process by bringing slag and Al-containing molten steel into contact with each other, a low nitrogen concentration range can be stably reached at high speed without causing erosion of the refractory of the vessel, such as a ladle, or overflow of the slag. Another object is to propose a molten steel secondary refining method by which this denitrification process and a desulfurization process can be performed within the same process to efficiently remove nitrogen, or nitrogen and sulfur, from molten steel. Further, a steel producing method that uses molten steel produced by this molten steel secondary refining method is proposed.

Solution to Problem

As a result of vigorously conducting studies in view of the above-described problems, the present inventors have found that appropriately managing the Al concentration in molten steel when blowing oxygen-containing gas so as to pierce slag to reach the molten steel can promote slag formation by heating of Al even when the slag composition has a low C/A ratio, and can thereby restrict the decarburization reaction and reduce the CO gas generation speed.

The present invention provides a method for secondarily refining molten steel that advantageously solves the above-described problems, which is defined in the claims.

The present invention further provides a method of producing steel according to the present invention that advantageously solves the above-described problems is characterized in that the molten steel produced by the method for secondarily refining molten steel is cast, after optionally adjusting the composition.

Advantageous Effects of Invention

According to the present invention, when performing a secondary refining process including a denitrification process of molten steel by blowing oxygen-containing gas onto slag, it is possible to stably remove nitrogen in the molten steel to a low nitrogen concentration range at high speed without causing erosion of the refractory of the vessel, such as a ladle, and overflow of the slag. It is further possible to promote removal of sulfur in the molten steel. By casting such low-nitrogen molten steel or low-nitrogen, low-sulfur molten steel after adjusting other compositions as necessary, economically excellent high-grade steel can be produced, which makes the present invention industrially useful.

Brief Description of Drawings

FIG. 1 is a schematic view showing one example of an apparatus suitable for a molten steel secondary refining method according to one embodiment of the present invention.

FIG. 2 is a graph showing a relationship between an Al concentration $[Al]_i$ in molten steel adjusted in an Al addition step and an achieved nitrogen concentration $[N]_f$.

FIG. 3 is a graph showing a relationship between an Al concentration $[Al]_e$ in molten steel immediately before an oxygen blowing process and a stirring power density $\varepsilon$ during slag formation for obtaining an achieved nitrogen concentration $[N]_f$ of 25 mass ppm.

FIG. 4 is a graph showing a relationship between an Al concentration $[Al]_f$ upon completion of processing and a slag forming index.

FIG. 5 is a graph showing a relationship between a ratio $L_s/L_{s0}$ between an initial slag thickness $L_{s0}$ and a depth $L_s$ of a depression in the slag due to oxygen-containing gas and an achieved Al concentration $[Al]_f$ in molten steel.

FIG. 6 is a graph showing a relationship between a ratio C/A (-) between a CaO concentration (C) and an $Al_2O_3$ concentration (A) in slag on a mass basis and the achieved nitrogen concentration $[N]_f$ in molten steel.

FIG. 7 is a graph showing a relationship between a ratio of an MgO concentration (MgO) to a CaO concentration (CaO) in slag and the achieved nitrogen concentration $[N]_f$ in molten steel.

FIG. 8 is a graph showing a relationship between a ratio of an MgO concentration (MgO) to a CaO concentration (CaO) in slag and a refractory erosion index.

FIG. 9 is a graph showing a relationship between a furnace internal pressure P and an upper limit Max $[N]_f$ of variations in the achieved nitrogen concentration in molten steel.

Description of Embodiments

Embodiments of the present invention will be specifically described below. The drawings are schematic and may differ from the reality. The following embodiments illustrate an apparatus and a method for embodying the technical concept of the present invention, and are not intended to restrict the configuration to the one described below. Thus, various changes can be made to the technical concept of the present invention within the technical scope described in the claims.

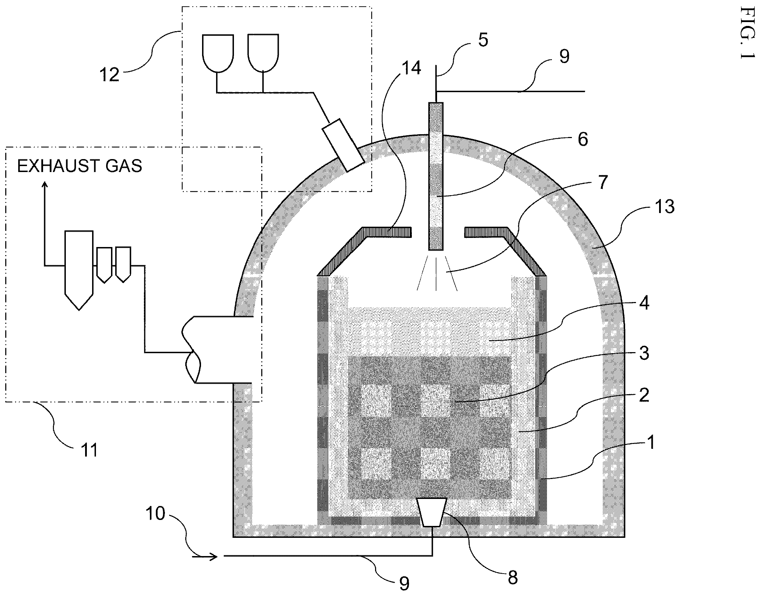

FIG. 1 shows an apparatus configuration suitable to implement the present invention. Molten steel 3 is charged into a vessel 1, such as a ladle, that is lined with a refractory 2, and slag 4 containing CaO and $Al_2O_3$ is formed on top of this molten steel 3. In a state where surfaces of the molten steel 3 and the slag 4 are subjected to a depressurized atmosphere inside a vacuum vessel 13 having an exhaust system 11 and an alloy addition system 12, $O_2$-containing gas is blown onto the slag 4 through a gas top-blowing lance 6 connected to a gas pipe 5. The molten steel 3 is stirred as a stirring inert gas 10 is blown in through a bottom-blowing nozzle 8 connected to the gas pipe 9. As the stirring inert gas 10, for example, Ar gas not including nitrogen gas is preferable. The top-blowing lance 6 is inserted so as to penetrate an inner lid 14 that covers an upper part of the vessel 1.

A step of adding a metal-Al-containing substance to the molten steel 3 to deoxidize the molten steel 3 and turn it into Al-containing molten steel (Al addition step) and a step of adding a CaO-containing substance to the molten steel 3 (CaO addition step) may be performed using the alloy addition system 12 or may be performed in a step before entering the vacuum vessel 13. A step of deoxidizing the molten steel 3 (deoxidization step) may be performed separately from the Al addition step, or a deoxidation process may be performed within the Al addition step. In the case where there is a deoxidation step at an early stage of the process, addition of a metal-Al-containing substance may be performed before the deoxidation step, or may be performed after the deoxidation step, or may be divided and performed before and after the deoxidation step. Adding Al before the deoxidation step can be expected to also have an effect of keeping the temperature of the molten steel high owing to combustion of Al, while adding Al after the deoxidation step can be expected to have a denitrifying effect. Further, when Al is divided and added before and after the deoxidation step, both of these effects can be expected. The CaO addition step can be performed at an arbitrary timing. Performing the CaO addition step after the deoxidization step is preferable, because then a temperature rise of the molten steel due to the deoxidation reaction can be used to slag formation. Performing the CaO addition step after the Al addition step is further preferable, because this can reduce deoxidization failure or variations in the slag composition due to the added Al-containing substance being hindered by the thick slag from reaching the molten steel.

To form the CaO-and-$Al_2O_3$-containing slag 4, CaO resulting from adding the CaO-containing substance and $Al_2O_3$ resulting from deoxidizing the molten steel is used. As the CaO-containing substance, for example, calcium aluminate that is a pre-melted or pre-mixed product may be used. As for the slag composition, a higher ratio of melting of slag (hereinafter referred to as a "slag formation rate") is more advantageous for the denitrification reaction.

To promote slag melting for forming the slag, it is preferable that stirring, for example, bottom-blowing stirring of the molten steel is performed. The method of supplying the stirring gas 10 into the molten steel may be, other than the above-described method, for example, a method of injecting it into the molten steel through an injection lance for blowing in an inert gas.

Next, preferred embodiments of the present invention will be described in detail along with how they were developed. In this Description, [M] represents a state of element M being dissolved and contained in molten steel, and (R) represents a state of a chemical substance R being dissolved and contained in slag. Units are added to express their respective composition ratios.

(First Embodiment)

A first embodiment was developed in an attempt to remove nitrogen by bringing Al-containing molten steel into contact with slag as well as to remove Al excessively contained in the molten steel by blowing oxygen. In a small-sized high-frequency vacuum induction melting furnace satisfying the configuration requirements of FIG. 1, the CaO-and-$Al_2O_3$-containing slag 4 was formed at the ratio of 15 kg/t or higher relative to 15 kg of the molten steel 3, in such an amount that the surface of the molten steel was not recognizable to the naked eye, and after the molten steel 3 was stirred by bottom-blown gas, $O_2$ gas was blown onto the slag. It was confirmed with the naked eye that the $O_2$ gas had pushed its way through the slag by the jet pressure and reached the surface of the molten steel. For example, at a position in the molten metal bath surface corresponding to an emerging point of the bottom-blown gas, the slag thickness is reduced due to bulging of the bath surface. When the $O_2$ gas is blown toward this emerging point of the bottom-blown gas, the $O_2$ gas can easily pierce the slag and be directly blown onto the molten steel.

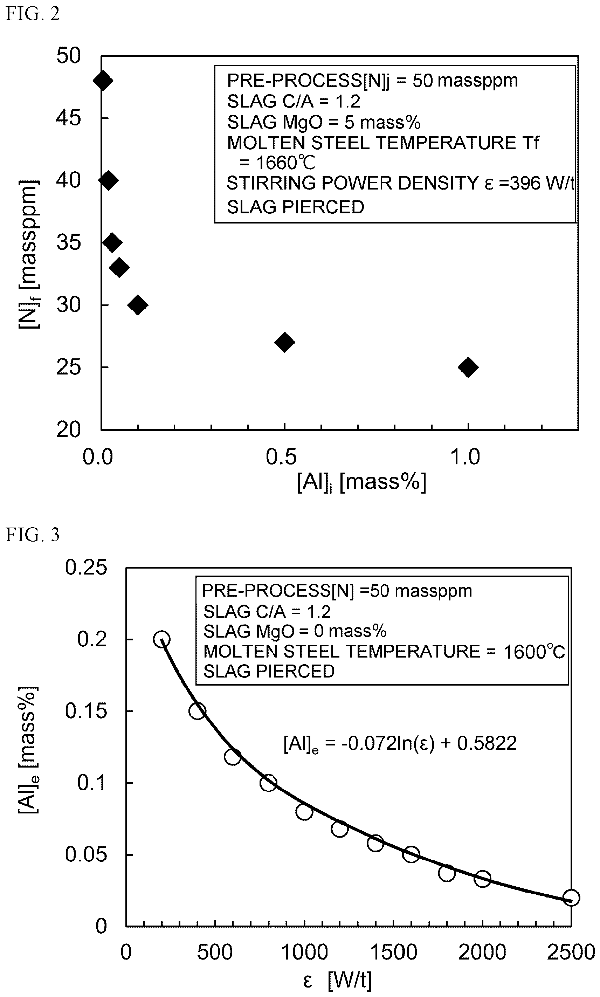

First, while the amount of Al-containing substance added in the Al addition step was varied, a relationship between an Al concentration $[Al]_i$ in the molten steel immediately before the oxygen blowing process involving blowing $O_2$ gas and an achieved N concentration $[N]_f$ was studied. As shown in FIG. 2, when the Al concentration $[Al]_i$ in the molten

steel immediately before the oxygen blowing process was lower than 0.03 mass%, denitrification could not be stably performed to an achieved N concentration $[N]_f$ of 35 mass ppm or lower. In this case, the furnace internal atmospheric pressure P was $5.3 \times 10^3$ Pa; the initial nitrogen concentration $[N]_i$ in the molten steel was 50 mass ppm; the slag composition had the mass ratio C/A between CaO and $Al_2O_3$ of 1.2; the MgO concentration (MgO) in the slag was 5 mass%; the stirring power density $\varepsilon$ was 396 W/t; the molten steel temperature $T_f$ was 1660°C; and the oxygen blowing process time t was 25 minutes. A possible explanation for this result is that, due to the oxygen-containing gas going through the slag, Al in the molten steel is oxidized and decreased and is unable to form aluminum nitride (AlN). It is preferable that the Al concentration $[Al]_i$ in the molten steel before the oxygen blowing process is 0.1 mass% or higher, because then the achieved nitrogen concentration $[N]_f$ in the molten steel can be made equal to or lower than 30 mass ppm. Further, it is preferable that the Al concentration $[Al]_i$ in the molten steel before the oxygen blowing process is 1.0 mass% or higher, because then the achieved nitrogen concentration $[N]_f$ in the molten steel can be made equal to or lower than 25 mass ppm.

Next, using the aforementioned small-sized high-frequency vacuum induction melting furnace, the minimum Al concentration $[Al]_e$ before oxygen blowing that was required for reducing nitrogen in molten steel to 25 ppm was studied. It turned out that, as shown in FIG. 3, the Al concentration $[Al]_e$ (mass%) required before oxygen blowing varied according to the stirring power density $\varepsilon$ (W/t) during slag formation. Here, the MgO concentration (MgO) in the slag was 0 mass% and the molten steel temperature $T_f$ was 1600°C, and the initial nitrogen concentration $[N]_i$ and the C/A in the slag composition were the same as those mentioned above. As preconditions for the study, the furnace atmospheric pressure P was $0.7 \times 10^5$ Pa; the stirring power density $\varepsilon$ was controlled so as to remain constant within the range of 200 to 2000 W/t during slag formation and the oxygen blowing process; and the oxygen blowing process time was 30 minutes. It was deduced from this result that contact between the slag and the molten steel at positions other than a hot spot (which refers to a portion where the molten steel surface is exposed due to the oxygen-containing gas) during oxygen blowing or the slag during slag formation before oxygen blowing promoted denitrification by the slag.

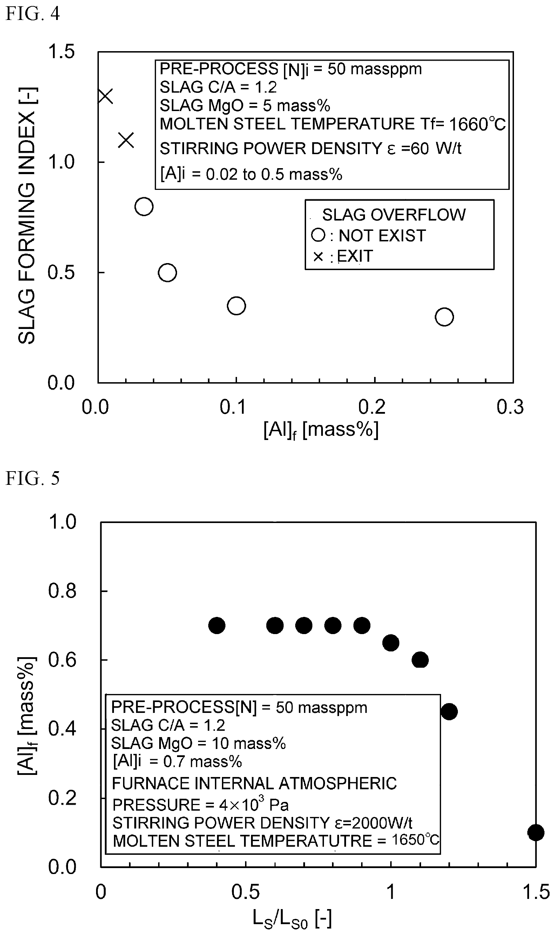

Further, using the aforementioned small-sized high-frequency vacuum induction melting furnace, a relationship between the Al concentration $[Al]_f$ in molten steel after the oxygen blowing process and a slag forming index was studied while the Al concentration $[Al]_i$ in the molten steel before the oxygen blowing process was varied from 0.02 to 0.5 mass%. Here, the slag forming index was defined as the ratio between the slag height calculated from the slag volume and a freeboard. The result is shown in FIG. 4. The cross mark represents the case where there was slag overflow, and the circle mark represents the case where there was no slag overflow. Here, the furnace internal atmospheric pressure P was $1 \times 10^5$ Pa; the stirring power density $\varepsilon$ was 60 W/t; the initial nitrogen concentration $[N]_i$ in the molten steel was 50 mass ppm; the initial C concentration [C] was 0.10 mass%; the slag composition had the mass ratio C/A between CaO and $Al_2O_3$ of 1.2; the MgO concentration (MgO) in the slag was 5 mass%; the molten steel temperature $T_f$ was 1660°C; and the processing time t was 18 minutes. The freeboard of the ladle was 1.5 m. It was found that slag overflow occurred when the Al concentration $[Al]_f$ in the molten steel after the oxygen blowing process fell below 0.03 mass% and the slag forming index exceeded 1. A possible explanation is that, as the oxidation reactions of Al and C with the $O_2$ gas blown in competed against each other, the Al concentration decreased and at the same time CO gas was generated, resulting in an increase in the slag volume. The result of the study as just described led to the development of the first embodiment, i.e., a method for secondarily refining molten steel in which CaO-and-$Al_2O_3$-containing slag is formed by a combination of an Al addition step of adding a metal-Al-containing substance to molten steel to turn the molten steel into Al-containing molten steel and a CaO addition step of adding a CaO-containing substance to the molten steel, and then an oxygen blowing process including a denitrification process is performed by blowing oxygen-containing gas so as to pierce the slag to reach the Al-containing molten steel, in which an Al concentration $[Al]_i$ (mass%) in the molten steel immediately before the oxygen blowing process is equal to or higher than a value $[Al]_e$ calculated by Formula (A) based on a stirring power density $\varepsilon$ (W/t) during formation of the slag, and an Al concentration $[Al]_f$ upon completion of the oxygen blowing process is 0.03 mass% or higher. When an Al concentration $[Al]_d$ given in product specifications is higher than the value $[Al]_e$ of Formula (A), the value of the Al concentration $[Al]_d$ is preferably used as the target value for the Al concentration $[Al]_f$ upon completion of the oxygen blowing process. When the target value $[Al]_d$ is lower than the value $[Al]_e$ of Formula (A), a process of oxidizing and removing Al is preferably performed in the oxygen blowing process.

$$[Al]_e = -0.072 \times \ln(\varepsilon) + 0.5822 \cdots (A)$$

(Second Embodiment)

A second embodiment was developed with an intention to simplify the step of the oxygen blowing process, which requires performing a so-called Al elimination process. In a small-sized high-frequency vacuum induction melting furnace satisfying the configuration requirements of FIG. 1, the CaO-and-$Al_2O_3$-containing slag 4 was formed at the ratio of 15 kg/t or higher relative to 15 kg of the molten steel 3, in such an amount that the surface of the molten steel was not recognizable to the naked eye, and $O_2$ gas was blown onto the slag surface at a position other than an emerging point of bottom-blown gas. The present inventors studied a relationship between the Al concentration $[Al]_f$ in the molten steel after the oxygen blowing process and the ratio $L_s/L_{s0}$ (-) between a measurement result of the slag thickness $L_{s0}$ (m) at the stage where the $CaO$-and-$Al_2O_3$-containing slag has melted before the oxygen blowing process and the depth $L_s$ (m) of a depression in the slag resulting when parameters in the formula described in Non Patent Literature 1, namely the liquid density, the gas density, the jet speed, etc., are changed to values complying with experimental conditions. As a result, as shown in FIG. 5, it was found that $L_s/L_{s0}$ being 1.0 or higher could reduce the Al concentration in the molten steel at the same time as removing nitrogen during the oxygen blowing process. In this case, the furnace internal atmospheric pressure P was $5.3 \times 10^3$ Pa; the initial nitrogen concentration $[N]_i$ in the molten steel was 50 mass ppm; the Al concentration $[Al]_i$ in the molten steel before the oxygen blowing process was 0.7 mass%; the slag composition had the mass ratio C/A between CaO and $Al_2O_3$ of 1.2; the MgO concentration (MgO) in the slag was 10 mass%; the molten steel temperature $T_f$ was 1650°C; and the processing time t was 30 minutes. The result of the study as just described led to the development of the second embodiment, i.e., a method for secondarily refining molten steel in which, in addition to the first embodiment, the oxygen-containing gas is supplied in the oxygen blowing process such that the ratio $L_s/L_{s0}$ between the thickness $L_{s0}$ of the slag and the depth $L_s$ of the depression resulting from the blowing of the oxygen-containing gas is 1.0 or higher. The ratio $L_s/L_{s0}$ being too high causes interference with operation due to spitting of molten steel etc.; therefore, the upper limit of the ratio $L_s/L_{s0}$ is preferably about 1.5 and further preferably about 1.3.

(Third Embodiment)

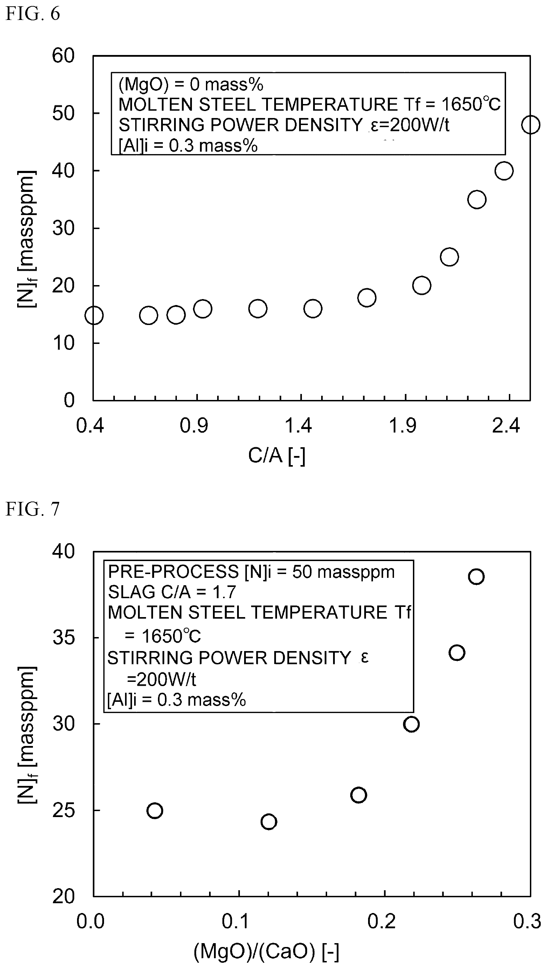

A third embodiment was found in the course of studying an influence on denitrification exerted by the slag composition, mainly the ratio C/A (-) between the CaO concentration (mass%) and the $Al_2O_3$ concentration (mass%) in the slag. In a test in which, using a small-sized high-frequency vacuum induction melting furnace satisfying the configuration requirements of FIG. 1, the MgO concentration in slag was 0% while C/A was varied from 0.4 to 2.5, the achieved nitrogen concentration $[N]_f$ remained at 20 mass ppm or lower when C/A was within the range of 0.4 to 2.0 as shown in FIG. 6. When C/A exceeded 1.8, the achieved nitrogen concentration $[N]_f$ started to increase. When 2.0 was exceeded, the achieved nitrogen concentration $[N]_f$ rose rapidly, and when 2.2 was exceeded, a low nitrogen concentration range (where the nitrogen concentration $[N]_f$ is 35 ppm or lower) was no longer reached. The result of the study as just described led to the development of the third embodiment, i.e., a method for secondarily refining molten steel in which, in addition to the first embodiment or the second embodiment, the mass ratio C/A (-) between the CaO concentration (CaO) (mass%) and the $Al_2O_3$ concentration ($Al_2O_3$) (mass%) in the slag is between 0.4 and 2.2, inclusive.

(Fourth Embodiment)

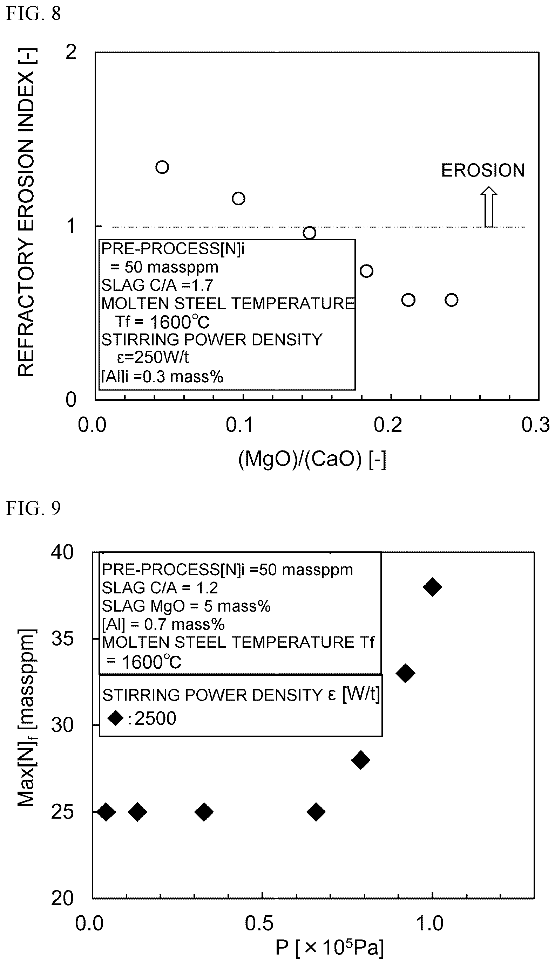

A fourth embodiment was found in the course of studying an influence on denitrification exerted by the slag composition, mainly the ratio (MgO)/(CaO) (-) of the MgO concentration (mass%) to the CaO concentration (mass%) in the slag that increases as a refractory erodes. Using the same conditions as in FIG. 6 except for the MgO concentration (MgO) in the slag, the mass ratio (MgO)/(CaO) was varied with C/A fixed at 1.7 to study the influence on the achieved nitrogen concentration $[N]_f$. The result is shown in FIG. 7. It can be seen that (MgO)/(CaO) being 0.25 or lower can make the achieved nitrogen concentration $[N]_f$ equal to or lower than 35 mass ppm. Further, (MgO)/(CaO) being 0.2 or lower can make the achieved nitrogen concentration $[N]_f$ even lower. Similarly, FIG. 8 shows an influence on erosion of the refractory exerted by the ratio (MgO)/(CaO) (-) of the MgO concentration (mass%) to the CaO concentration (mass%) in the slag. (MgO)/(CaO) being 0.14 or higher is preferable because it has little influence on erosion of the refractory. The result of the study as just described led to the development of the fourth embodiment, i.e., a method for secondarily refining molten steel in which, in addition to one of the first to third embodiments, the mass ratio of the MgO concentration (MgO) (mass%) to the CaO concentration (CaO) (mass%) in the slag is 0.25 or lower. The mass ratio of the MgO concentration (MgO) (mass%) to the CaO concentration (CaO) (mass%) in the slag is preferably within the range of 0.14 to 0.25.

(Fifth Embodiment)

A fifth embodiment was found in the course of studying an influence on a denitrification reaction exerted by a degree of vacuum reached. In a small-sized high-frequency vacuum induction melting furnace satisfying the configuration requirements of FIG. 1, the $CaO$-and-$Al_2O_3$-containing slag 4 including MgO at the concentration of 0 to 17 mass% was formed at the ratio of 15 kg/t or higher relative to 15 kg of the molten steel 3, in such an amount that the surface of the molten steel was not recognizable to the naked eye. After the atmospheric pressure P inside the furnace was adjusted, a process of blowing oxygen to the molten steel was performed by blowing $O_2$ gas so as to pierce the slag to reach the slag, while giving the molten steel a stir at the stirring power density of 2500 W/t. In an oxygen blowing test in which the degree of vacuum in the furnace atmosphere (atmospheric pressure) P (Pa) was varied, as shown in FIG. 9, an upper limit value Max $[N]_f$ (mass ppm) of variations in the nitrogen concentration after processing could be stably maintained in a low nitrogen region of 35 mass ppm at a furnace atmospheric pressure P of $9.3 \times 10^4$ Pa or lower. In this case, the initial nitrogen concentration $[N]_i$ in the molten steel was 50 mass ppm; the Al concentration $[Al]_i$ was 0.7 mass%; the slag composition had a mass ratio C/A between CaO and $Al_2O_3$ of 1.2; the MgO concentration (MgO) in the slag was 5 mass%; the molten steel temperature $T_f$ was 1600°C; and the processing time t was 30 minutes. The result of the study as just described led to the development of the fifth embodiment, i.e., a method for secondarily refining molten steel in which, in addition to one of the first to fourth embodiments, surfaces of the Al-containing molten steel and the slag are subjected to a depressurized atmosphere of $9.3 \times 10^4$ Pa or lower. A depressurized atmosphere of $6.7 \times 10^4$ Pa or lower is preferable. Since excessive depressurization causes an increase in facility costs of the exhaust system etc., the lower limit of the furnace atmospheric pressure P is preferably about $10^3$ Pa.

(Sixth Embodiment)

A sixth embodiment was found in the course of exploring the possibilities of simultaneously processing denitrification and desulfurization. It is preferable that conditions for the oxygen blowing process is selected from those of the above-described embodiments. It is known that, to promote the desulfurization reaction, Mannesmann Slag Index (MSI) = $((CaO/SiO_2)/Al_2O_3)$ is preferably within the range of 0.25 to 0.45. It is preferable that a CaO containing substance is added such that the mass ratio $(CaO)/(Al_2O_3)$ becomes 1.8 to 2.2 relative to the amount of $Al_2O_3$ generated during the deoxidation process and slag adjustment, and that MgO clinker is added as necessary such that the mass ratio of the MgO concentration relative to the amount of CaO added becomes about 0.2. The concentration of $SiO_2$ is not actively controlled. A slag composition advantageous for desulfurization has a high C/A, which is, on the other hand, disadvantageous from the viewpoint of denitrification. Therefore, when supplying oxygen-containing gas to promote denitrification, it is preferable that the process is performed at a high degree of vacuum, with the ratio $L_s/L_{s0}$ between the slag thickness $L_{s0}$ and the depth $L_s$ of the depression resulting from blowing of the oxygen-containing gas higher than 1.

Molten steel produced by the above-described method for secondarily refining molten steel is cast preferably after additionally it is adjusted to a predetermined composition and form control and floating separation of inclusions are performed as necessary. It is possible to manufacture high-grade steel which is low-nitrogen steel or low-nitrogen, low-sulfur steel and of which various compositions have been adjusted.

Examples

In the following, examples of the present invention will be described in detail. Using an apparatus having the configuration of FIG. 1, metal Al was added to molten steel having the temperature of 1600°C to 1750°C inside a ladle. To adjust the temperature, the molten steel was heated in an LF apparatus. Al for deoxidation was added all at once before the LF processing or at the time of adding Al in a VOD apparatus. In the VOD apparatus, the Al concentration in the molten steel before oxygen blowing was adjusted according to whether Al was added, and $[Al]_i$ was 0.02 to 0.48 mass%. After CaO and refractory-protecting MgO were added to form CaO-$Al_2O_3$ binary slag or CaO-$Al_2O_3$-MgO ternary slag, oxygen gas was blown onto the slag. Ar gas was supplied to the molten steel through a bottom-blowing plug that was mounted at the lower part of the ladle at the stirring power density of 60 to 600 kW/t. The test was conducted using an amount of molten steel of 160 t.

Table 1-1 and Table 1-2 show the test conditions and the results. The examples of the present invention could make the achieved nitrogen concentration $[N]_f$ in the molten steel after the oxygen blowing process equal to or lower than 35 mass ppm. By contrast, comparative examples failed to achieve that. Further, in tests No. 7 and 8, the processing was forced to be discontinued due to slag overflow. Under test conditions No. 5, 14, and 16 in which C/A in the slag was within the range of 1.8 to 2.2, the desulfurization efficiency was also found to be excellent. In processes No. 11 and 15, partial solidification without slag formation was observed in the slag.

[Table 1-1]

| No. | Slag | | | Slag pierced? | ε | $L_S / L_{S0}$ | P | Before LF | VOD | Tf | t | Remarks |
|---|---|---|---|---|---|---|---|---|---|---|---|---|
| | (C/A)* | (MgO) | (MgO/CaO) | | | | | Amount of Al added | Amount of Al added | | | |
| | - | mass% | - | | W/t | - | Pa | kg/t-molten steel | kg/t-molten steel | °C | min | |
| 1 | 1.20 | 9.2 | 0.2 | Yes | 396 | 1.1 | 13300 | 0.85 | 2.78 | 1630 | 13 | Invention Example |
| 2 | 1.20 | 9.2 | 0.2 | Yes | 582 | 1.1 | 5320 | 0.85 | 2.78 | 1635 | 5 | Invention Example |
| 3 | 1.50 | 10.1 | 0.2 | Yes | 288 | 1.3 | 1330 | 0.85 | 2.78 | 1660 | 19 | Invention Example |
| 4 | 1.50 | 10.1 | 0.2 | Yes | 288 | 1.3 | 1330 | 0.00 | 3.63 | 1660 | 19 | Invention Example |
| 5 | 2.00 | 11.1 | 0.2 | Yes | 288 | 1.4 | 1330 | 0.85 | 2.78 | 1660 | 25 | Invention Example |
| 6 | 0.80 | 7.7 | 0.2 | Yes | 288 | 1.1 | 13300 | 0.85 | 2.78 | 1630 | 13 | Invention Example |
| 7 | 0.80 | 2.0 | 0.05 | No | 288 | 0.8 | 13300 | 0.85 | 0.00 | 1630 | - | Comparative Example |
| 8 | 0.80 | 7.7 | 0.2 | Yes | 288 | 1.1 | 13300 | 0.85 | 0.50 | 1660 | - | Comparative Example |
| 9 | 0.80 | 7.7 | 0.2 | Yes | 288 | 1.1 | 13300 | 0.85 | 2.78 | 1660 | 13 | Invention Example |
| 10 | 0.80 | 7.7 | 0.2 | No | 288 | 0.9 | 13300 | 0.85 | 2.78 | 1660 | 13 | Comparative Example |
| 11 | 0.30 | 4.1 | 0.2 | Yes | 288 | 1.1 | 13300 | 0.85 | 2.78 | 1660 | 13 | Comparative Example |
| 12 | 0.40 | 5.1 | 0.2 | Yes | 288 | 1.1 | 13300 | 0.85 | 2.78 | 1660 | 13 | Invention Example |
| 13 | 1.80 | 10.7 | 0.2 | Yes | 288 | 1.1 | 13300 | 0.85 | 2.78 | 1660 | 13 | Invention Example |
| 14 | 1.90 | 10.9 | 0.2 | Yes | 288 | 1.1 | 13300 | 0.85 | 2.78 | 1660 | 13 | Invention Example |
| 15 | 2.30 | 11.5 | 0.2 | Yes | 288 | 1.1 | 13300 | 0.85 | 2.78 | 1660 | 13 | Comparative Example |
| 16 | 2.20 | 11.4 | 0.2 | Yes | 288 | 1.1 | 13300 | 0.85 | 2.78 | 1660 | 13 | Invention Example |
| 17 | 1.00 | 8.5 | 0.2 | Yes | 61 | 1.1 | 101323 | 0.85 | 2.78 | 1660 | 19 | Comparative Example |
| 18 | 1.00 | 8.5 | 0.2 | Yes | 70 | 1.1 | 93000 | 0.85 | 4.78 | 1660 | 18 | Invention Example |

*(C/A) represents the mass ratio between CaO (C) and $Al_2O_3$ (A) in the slag.

[Table 1-2]

| No. | Slag overflowed? | Refractory eroded? | Before process | Element composition of VOD molten steel | | | | | | | Remarks |
|---|---|---|---|---|---|---|---|---|---|---|---|
| | | | [C] | [Al]e | [Al]i | [Al]f | [N]i | [N]f | [S]i | [S]f | |
| | | | mass% | mass% | mass% | mass% | massppm | massppm | mass% | mass% | |
| 1 | No | No | 0.03 | 0.15 | 0.28 | 0.04 | 40 | 25 | 0.04 | 0.007 | Invention Example |
| 2 | No | No | 0.01 | 0.12 | 0.28 | 0.05 | 60 | 30 | 0.05 | 0.006 | Invention Example |
| 3 | No | No | 0.06 | 0.17 | 0.28 | 0.04 | 45 | 20 | 0.05 | 0.003 | Invention Example |
| 4 | No | No | 0.06 | 0.17 | 0.28 | 0.04 | 45 | 20 | 0.05 | 0.003 | Invention Example |
| 5 | No | No | 0.10 | 0.17 | 0.28 | 0.05 | 60 | 25 | 0.05 | 0.001 | Invention Example |
| 6 | No | No | 0.03 | 0.17 | 0.28 | 0.03 | 40 | 25 | 0.05 | 0.006 | Invention Example |
| 7 | Yes | No | 0.05 | 0.17 | 0.02 | 0.02 | 45 | - | 0.05 | - | Comparative Example |
| 8 | Yes | No | 0.03 | 0.17 | 0.05 | 0.02 | 55 | - | 0.05 | - | Comparative Example |
| 9 | No | No | 0.03 | 0.17 | 0.28 | 0.04 | 55 | 28 | 0.05 | 0.006 | Invention Example |
| 10 | No | No | 0.03 | 0.17 | 0.28 | 0.04 | 55 | 56 | 0.05 | 0.006 | Comparative Example |
| 11 | No | Yes | 0.03 | 0.17 | 0.28 | 0.04 | 55 | 57 | 0.05 | 0.04 | Comparative Example |
| 12 1 | No | Yes | 0.03 | 0.17 | 0.28 | 0.04 | 55 | 20 | 0.05 | 0.04 | Invention Example |
| 13 | No | No | 0.03 | 0.17 | 0.28 | 0.04 | 55 | 35 | 0.05 | 0.003 | Invention Example |
| 14 | No | No | 0.03 | 0.17 | 0.28 | 0.05 | 55 | 30 | 0.05 | 0.001 | Invention Example |
| 15 | No | No | 0.03 | 0.17 | 0.28 | 0.05 | 55 | 56 | 0.05 | 0.001 | Comparative Example |
| 16 | No | No | 0.03 | 0.17 | 0.28 | 0.05 | 55 | 33 | 0.05 | 0.001 | Invention Example |
| 17 | No | Yes | 0.06 | 0.29 | 0.28 | 0.05 | 53 | 55 | 0.05 | 0.05 | Comparative Example |
| 18 | No | Yes | 0.06 | 0.28 | 0.48 | 0.06 | 55 | 35 | 0.05 | 0.006 | Invention Example |

*In tests No. 7 and 8, processing was discontinued due to slag overflow.

EP 4 353 844 B1

Industrial Applicability

When applied to a steel production process of producing molten steel by melting low-carbon scrap or reduced iron in an electric furnace etc., the secondarily refining molten steel according to the present invention can stably mass-produce low-nitrogen steel or low-nitrogen, low-sulfur steel. Thus, this method contributes to reducing $CO_2$ emissions and is industrially useful.

Reference Signs List

1    Vessel
2    Refractory
3    Molten steel
4    CaO-and-$Al_2O_3$-containing slag
5    Gas pipe (oxygen gas)
6    Gas top-blowing lance
7    $O_2$-containing gas
8    Bottom-blowing nozzle
9    Gas pipe (inert gas)
10    Inert gas for stirring molten steel bath
11    Exhaust system
12    Alloy addition system
13    Vacuum vessel
14    Inner lid

**Claims**

1.    A method for secondarily refining molten steel wherein CaO-and-$Al_2O_3$-containing slag is formed by a combination of an Al addition step of adding a metal-Al-containing substance to molten steel to turn the molten steel into Al-containing molten steel and a CaO addition step of adding a CaO-containing substance to the molten steel, and then an oxygen blowing process including a denitrification process is performed by blowing oxygen-containing gas so as to pierce the slag to reach the Al-containing molten steel, wherein the oxygen-containing gas is supplied such that a ratio $L_s/L_{s0}$ between a thickness $L_{s0}$ of the slag and a depth $L_s$ of a depression resulting from the blowing of the oxygen-containing gas is 1.0 or higher, **characterized in that**:

an Al concentration $[Al]_i$ (mass%) in the molten steel immediately before the oxygen blowing process is equal to or higher than a value $[Al]_e$ calculated by Formula (A) based on a stirring power density $\varepsilon$ (W/t) during formation of the slag;
an Al concentration $[Al]_f$ upon completion of the oxygen blowing process is 0.03 mass% or higher,

$$[Al]_e = -0.072 \times \ln(\varepsilon) + 0.5822 \cdots (A);$$

and
wherein a mass ratio C/A (-) between a CaO concentration (CaO) (mass%) and an $Al_2O_3$ concentration ($Al_2O_3$) (mass%) in the slag is between 0.4 and 2.2, both inclusive.

2.    The method for secondarily refining molten steel according to claim 1, wherein the Al addition step includes a step of adding a metal-Al-containing substance to the molten steel to turn the molten steel into deoxidized molten steel.

3.    The method for secondarily refining molten steel according to claim 1 or 2, wherein a mass ratio of an MgO concentration (MgO) (mass%) to a CaO concentration (CaO) (mass%) in the slag is 0.25 or lower.

4.    The method for secondarily refining molten steel according to any one of claims 1 to 3, wherein, in the oxygen blowing process, surfaces of the Al-containing molten steel and the slag are subjected to a depressurized atmosphere of $9.3 \times 10^4$ Pa or lower.

5. A method for secondarily refining molten steel in which CaO-and-Al$_2$O$_3$-containing slag is formed on top of Al-containing molten steel charged in a vessel, and nitrogen and sulfur in the molten steel are removed by blowing oxygen-containing gas so as to pierce the slag to reach the Al-containing molten steel and bringing the slag and the molten steel into contact with each other, **characterized in that**,

an oxygen blowing process according to the method for secondarily refining molten steel according to any one of claims 1 to 4 is performed, and

during the oxygen blowing process, an Al concentration in the molten steel is kept at 0.05 mass% or higher, and a ratio C/A (-) between a CaO concentration (mass%) and an Al$_2$O$_3$ concentration (mass%) in the slag is controlled between 1.8 and 2.2, both inclusive.

6. A method of producing steel **characterized in that** molten steel produced by the method for secondarily refining molten steel according to any one of claims 1 to 5 is cast after optionally adjusting the composition.

**Patentansprüche**

1. Verfahren zum sekundären Frischen einer Stahlschmelze, wobei CaO- und Al$_2$O$_3$-haltige Schlacke durch Kombination eines Al-Zugabeschritts zum Zugeben einer metallisches Al enthaltenen Substanz zu einer Stahlschmelze, um die Stahlschmelze in Al-haltige Stahlschmelze zu überführen, und eines CaO-Zugabeschritts zum Zugeben einer CaOhaltigen Substanz zu der Stahlschmelze gebildet wird und dann ein Sauerstoffeinblasprozess einschließlich eines Entstickungsprozesses durch Einblasen eines sauerstoffhaltigen Gases so, dass die Schlacke durchdrungen wird, um die Al-haltige Stahlschmelze zu erreichen, durchgeführt wird, wobei das sauerstoffhaltige Gas so zugeführt wird, dass ein Verhältnis $L_s/L_{s0}$ zwischen einer Dicke $L_{s0}$ der Schlacke und einer Tiefe $L_s$ einer Vertiefung, die aus dem Einblasen des sauerstoffhaltigen Gases resultiert, 1,0 oder höher ist, **dadurch gekennzeichnet, dass**:

eine Al-Konzentration $[Al]_i$ (Masse-%) in der Stahlschmelze direkt vor dem Sauerstoffeinblasprozess gleich oder höher als ein Wert $[Al]_e$ ist, der durch Formel (A) basierend auf eine Rührleistungsdichte $\varepsilon$ (W/t) während der Bildung der Schlacke berechnet wird,
eine Al-Konzentration $[Al]_f$ nach Abschluss des Sauerstoffeinblasprozesses 0,03 Masse-% oder höher ist,

$$[Al]_e = -0.072 \times \ln(\varepsilon) + 0{,}5822 \quad \dots (A) ,$$

und
wobei ein Masseverhältnis C/A(-) zwischen einer CaO-Konzentration (CaO) (Masse-%) und einer Al$_2$O$_3$-Konzentration (Al$_2$O$_3$) (Masse-%) in der Schlacke zwischen 0,4 und 2,2 jeweils einschließlich liegt.

2. Verfahren zum sekundären Frischen einer Stahlschmelze gemäß Anspruch 1, wobei der Al-Zugabeschritt einen Schritt zum Zugeben einer metallisches Al enthaltenden Substanz zu der Stahlschmelze, um die Stahlschmelze in eine desoxidierte Stahlschmelze zu überführen, einschließt.

3. Verfahren zum sekundären Frischen einer Stahlschmelze gemäß Anspruch 1 oder 2, wobei ein Masseverhältnis einer MgO-Konzentration (MgO) (Masse-%) zu einer CaO-Konzentration (CaO) (Masse-%) in der Schlacke 0,25 oder niedriger ist.

4. Verfahren zum sekundären Frischen einer Stahlschmelze gemäß einem der Ansprüche 1 bis 3, wobei in dem Sauerstoffeinblasprozess Oberflächen der Al-haltigen Stahlschmelze und der Schlacke einer drucklosen Atmosphäre von $9{,}3 \times 10^4$ Pa oder niedriger ausgesetzt werden.

5. Verfahren zum sekundären Frischen einer Stahlschmelze, in dem CaO- und Al$_2$O$_3$-haltige Schlacke auf einer in ein Gefäß gefüllten Al-haltigen Stahlschmelze gebildet wird und Stickstoff und Schwefel in der Stahlschmelze entfernt werden, indem ein sauerstoffhaltiges Gas so eingeblasen, dass die Schlacke durchdrungen wird, um die Al-haltige Stahlschmelze zu erreichen, und die Schlacke und die Stahlschmelze miteinander in Kontakt gebracht werden, **dadurch gekennzeichnet, dass**

ein Sauerstoffeinblasprozess gemäß dem Verfahren zum sekundären Frischen einer Stahlschmelze gemäß einem der Ansprüche 1 bis 4 durchgeführt wird und

während des Sauerstoffeinblasprozesses eine Al-Konzentration in der Stahlschmelze bei 0,05 Masse-% oder höher gehalten wird und ein Verhältnis C/A(-) zwischen einer CaO-Konzentration (Masse-%) und einer $Al_2O_3$-Konzentration (Masse-%) in der Schlacke zwischen 1,8 und 2,2 jeweils einschließlich geregelt wird.

6. Verfahren zur Herstellung von Stahl, **dadurch gekennzeichnet, dass** eine Stahlschmelze, die durch das Verfahren zum sekundären Frischen einer Stahlschmelze gemäß einem der Ansprüche 1 bis 5 nach optionaler Einstellung der Zusammensetzung gegossen wird.

**Revendications**

1. Procédé d'affinage secondaire d'acier en fusion dans lequel du laitier contenant du CaO et de l'$Al_2O_3$ est formé par une combinaison d'une étape d'ajout d'Al consistant à ajouter une substance contenant du métal Al à de l'acier fondu afin de transformer l'acier fondu en acier fondu contenant de l'Al.

et une étape d'ajout de CaO consistant à ajouter une substance contenant du CaO à l'acier fondu, et ensuite un processus de soufflage d'oxygène incluant un processus de dénitrification est effectué en soufflant un gaz contenant de l'oxygène de manière à percer le laitier pour atteindre l'acier fondu contenant de l'aluminium, dans lequel le gaz contenant de l'oxygène est fourni de telle sorte que le rapport $L_S/L_{S0}$ entre l'épaisseur $L_{S0}$ du laitier et la profondeur $L_S$ d'une dépression résultant du soufflage du gaz contenant de l'oxygène soit supérieur ou égal à 1,0, **caractérisé en ce que** :

une concentration en $[Al]_i$ (% en masse) dans l'acier fondu immédiatement avant le processus de soufflage d'oxygène est égale ou supérieure à une valeur $[Al]_e$ calculée à l'aide de la formule (A) sur la base d'une densité de puissance d'agitation $\varepsilon$ (W/t) pendant la formation du laitier ;
une concentration en $[Al]_f$ à la fin du processus de soufflage d'oxygène est de 0,03 % en masse ou plus,

$$[Al]_e = -0,072 \times \ln(\varepsilon) + 0,5822 \bullet\bullet\bullet (A);$$

et
dans lequel un ratio en masse C/A (-) entre une concentration en CaO (CaO) (% en masse) et une concentration en $Al_2O_3$ ($Al_2O_3$) (% en masse) dans le laitier se situe entre 0,4 et 2,2, ces deux valeurs incluses.

2. Procédé de raffinage secondaire d'acier fondu selon la revendication 1, dans lequel l'étape d'ajout d'Al inclut une étape consistant à ajouter une substance contenant du métal-Al à l'acier fondu afin de transformer l'acier fondu en acier fondu désoxydé.

3. Procédé de raffinage secondaire d'acier fondu selon la revendication 1 ou 2, dans lequel un ratio en masse d'une concentration en MgO (MgO) (% en masse) et la concentration en CaO (CaO) (% en masse) dans le laitier est de 0,25 ou moins.

4. Procédé de raffinage secondaire d'acier fondu selon l'une quelconque des revendications 1 à 3, dans lequel, dans le processus de soufflage d'oxygène, les surfaces de l'acier fondu contenant de l'Al et du laitier sont soumises à une atmosphère dépressurisée de $9,3 \times 10^4$ Pa ou moins.

5. Procédé de raffinage secondaire de l'acier fondu dans lequel du laitier contenant du CaO et de l'$Al_2O_3$ se forme sur le dessus de l'acier fondu contenant de l'Al chargé dans un récipient, et l'azote et le soufre dans l'acier fondu sont éliminés par soufflage d'un gaz contenant de l'oxygène de manière à percer le laitier pour atteindre l'acier fondu contenant de l'Al et amener le laitier et l'acier fondu en contact l'un avec l'autre, **caractérisé en ce que**,

un processus de soufflage d'oxygène selon le procédé de raffinage secondaire de l'acier fondu selon l'une quelconque des revendications 1 à 4 est mis en œuvre, et
pendant le processus de soufflage d'oxygène, une concentration en Al dans l'acier fondu est maintenue à 0,05 % en masse ou plus, et un rapport C/A (-) entre une concentration en CaO (% en masse) et une concentration en $Al_2O_3$ (en masse %) dans le laitier est contrôlée entre 1,8 et 2,2, ces deux valeurs étant incluses.

6. Procédé de production d'acier **caractérisé en ce que** l'acier fondu produit par le procédé de raffinage secondaire de l'acier fondu selon l'une quelconque des revendications 1 à 5 est coulé après ajustement facultatif de la composition.

FIG. 1

EXHAUST GAS

FIG. 2

PRE-PROCESS[N]j = 50 massppm
SLAG C/A = 1.2
SLAG MgO = 5 mass%
MOLTEN STEEL TEMPERATURE Tf
  = 1660℃
STIRRING POWER DENSITY ε =396 W/t
SLAG PIERCED

FIG. 3

PRE-PROCESS[N] =50 massppm
SLAG C/A = 1.2
SLAG MgO = 0 mass%
MOLTEN STEEL TEMPERATURE = 1600℃
SLAG PIERCED

$[Al]_e = -0.072\ln(\varepsilon) + 0.5822$

FIG. 4

FIG. 5

FIG. 6

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007211298 A
- US 6190435 B1

- KR 20190142355 A

**Non-patent literature cited in the description**

- **UENO et al.** *Tetsu-to-Hagane*, 2015, vol. 101, 74